# EUROPEAN PATENT APPLICATION

(11) **EP 4 134 330 A1**
(43) Date of publication of application: **15.02.2023**
(21) Application number: 22188729.2
(22) Date of filing: 04.08.2022
(51) Int. Cl.: B65D 85/804

(54) **CAPSULE FOR INFUSION PRODUCTS**

(30) Priority: 10.08.2021 IT 202100021692
(71) Applicant: Macchiavelli S.r.l. a Socio Unico, 40138 Bologna (IT)
(72) Inventor: RONDELLI, Raffaele, 40138 Bologna (IT)
(74) Representative: Studio Torta S.p.A.

(57) **Abstract**

A capsule (1) for infusion products having a distal end (ED) and a proximal end (EP) opposite the distal end (ED); the capsule (1) comprises: a cup-shaped body (2), which defines a cavity (7) configured to house an infusion material; the cup-shaped body (2) comprises a side wall (4) and a bottom wall (5); and a closing element (3), which is arranged so as to close the cavity (7) of the cup-shaped body (2) in the area of the proximal end (EP). The bottom wall (5) comprises at least one deformation damping member (21), which is configured to allow at least one portion of the bottom wall (5) to move, in use, between an initial position (PI) and a final position (PF). In the final position (PF), said at least one portion of the bottom wall (5) is longitudinally shifted towards the proximal end (EP) relative to the initial position (PI) .

## Description

### CROSS-REFERENCE TO RELATED APPLICATIONS

This Patent Application claims priority from Italian Patent Application No. 102021000021692 filed on 10/08/2021.

### TECHNICAL FIELD

The present invention relates to a capsule for infusion products.

More specifically, the present invention is advantageously (but not exclusively) applied to capsules for the infusion of granular, powder or leaf products such as for example coffee, barley, powdered milk, tea, camomile tea, fruit.

### PRIOR ART

As is known, capsules for infusion products typically comprise a cup-shaped body preferably having, as a whole, a truncated cone shape which comprises a side wall and a bottom wall and has a proximal end closed by a closing element, also called lid. Typically, the proximal end has a dimension (in particular, diameter) greater than the distal end (in the area of the bottom wall of the cup-shaped body).

The cup-shaped body thus defines a cavity inside which the granular, powder or leaf infusion material is housed.

The capsule for infusion products is configured to be arranged, in use, inside a percolation chamber of a beverage extraction machine. The percolation chamber defines a housing and typically has a support which defines an upper shoulder against which an upper edge of the side wall of the cup-shaped body abuts.

The capsule housed in the percolation chamber is perforated by means of a perforation unit which comprises perforation means. The perforation means are configured to perforate the capsule in the area of the closing element and of the bottom wall of the cup-shaped body. In particular, through at least one opening (in particular, hole) made in the area of the closing element, water is injected under pressure for mixing it inside the cup-shaped body with the infusion product. Whereas, through at least one opening (in particular, hole) made in the area of the bottom wall of the cup-shaped body, the infused beverage comes out of the cup-shaped body for being collected inside a container, such as for example a coffee cup, mug or glass.

The cup-shaped body of the capsule for infusion products typically consists of a single element made of a plastic material or a biodegradable or compostable material (i.e. a material that complies with standard UNI EN 13432).

The above-described capsules have a plurality of drawbacks and disadvantages.

Firstly, the material of known type with which the cup-shaped body is manufactured is a rigid and fragile material. Therefore, when the perforation means perforate the bottom wall, cracks are created in the area thereof, which originate in the proximity of the entry area of the perforation means. Through such cracks in the bottom wall, the granular, powder or leaf infusion material can come out and fall into the container, contaminating with solid or semi-solid material (i.e. non-liquid material) the beverage obtained by means of infusion. Furthermore, also the openings (in particular, holes) made by the perforation means do not have a uniform shape and dimension. In particular, the made openings can have a conformation such that the granular, powder or leaf infusion material can unintentionally come out of said openings and fall into the container, contaminating with solid or semi-solid material (i.e. non-liquid material) the beverage obtained by means of infusion. Obviously, these drawbacks are greatly undesired by every user who would in actual fact throw such contaminated beverage away.

Secondly, the capsules of known type have the disadvantage that the perforation of the bottom wall by means of the perforation means generates a conical deformation of the bottom wall up to causing it to rupture. However, such deformation of the bottom wall creates openings (i.e. holes) which, due to their conformation, create a discontinuous jet with intermittent fall (i.e. trickling or dripping) of the infused beverage. Obviously, this type of jet is not desired by the user who would instead want a continuous and uniform jet from the beginning to the end of the dispensing of the infused beverage.

### DESCRIPTION OF THE INVENTION

The object of the present invention is to provide a capsule for infusion products which is devoid of the drawbacks of the state of the art and which is easy and cost-effective to manufacture.

According to the present invention, a capsule for infusion products is provided according to what is claimed in the appended claims.

### BRIEF DESCRIPTION OF THE DRAWINGS

In order to better understand the invention, embodiments are described, by mere example, wherein:
- Figure 1 is a side view of a capsule manufactured in accordance with the present invention;
- Figure 2 is a bottom plan view of the capsule of Figure 1;
- Figure 3 is a top plan view of the capsule of Figure 1;
- Figure 4 is a cross-section view of the capsule of Figure 1 according to a first embodiment;
- Figure 5 is an enlarged view of a detail of Figure 4;
- Figure 6 is a cross-section view of the capsule manufactured according to a further and alternative embodiment;
- Figure 7 is an enlarged view of a detail of Figure 6;
- Figure 8 is a schematic cross-section view of the capsule of Figure 6 arranged inside a percolation chamber;
- Figure 9 is a cross-section view of the capsule manufactured according to a further and alternative embodiment;
- Figure 10 is an enlarged view of a detail of Figure 9;
- Figure 11 is a schematic cross-section view of the capsule of Figure 9 arranged inside a percolation chamber;
- Figure 12 is a schematic bottom perspective view of the capsule manufactured according to a further and alternative embodiment;
- Figure 13 is a schematic cross-section view of the capsule of Figure 12; and
- Figure 14 is an enlarged view of a detail of Figure 13.

### PREFERRED EMBODIMENTS OF THE INVENTION

In the accompanying figures, reference numeral 1 indicates, as a whole, a capsule for infusion products according to the present invention. The capsule 1 has a proximal end EP (in the area of which, in use, water is injected under pressure) and a distal end ED (in the area of which, in use, the infused beverage comes out). The proximal end EP is opposite the distal end ED.

Preferably, the water injected under pressure is hot, but alternatively it could be cold or warm.

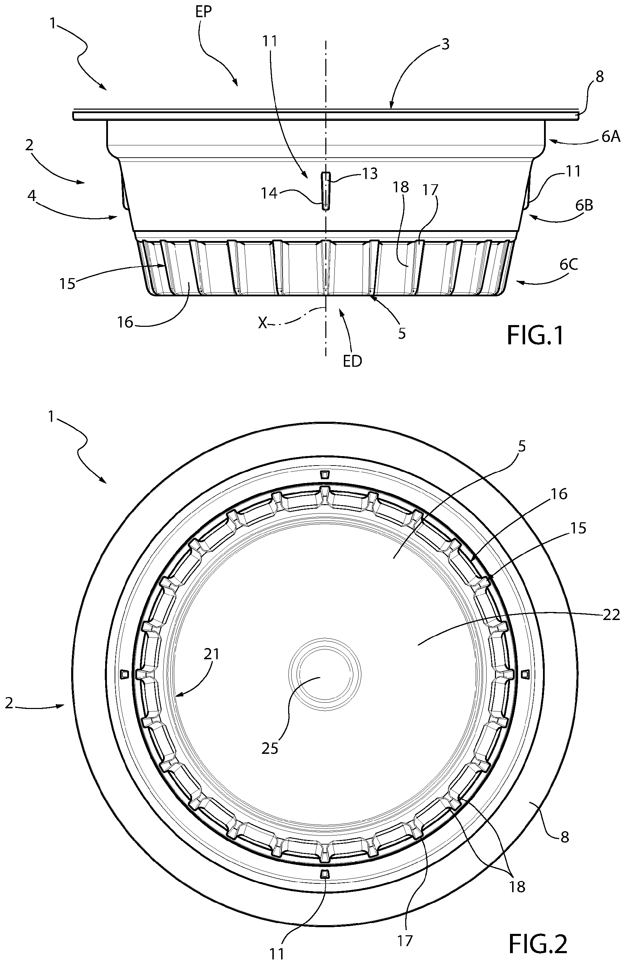

The capsule 1 comprises a cup-shaped body 2 and a closing element 3, i.e. a lid. The cup-shaped body 2 defines a cavity 7 configured to house therein an infusion material, preferably granular, powder or leaf. The closing element 3 is schematically illustrated only in Figure 1, whereas it was removed in the remaining figures for improving the clarity. The closing element 3 is arranged so as to close the cavity 7 of the cup-shaped body 2 in the area of the proximal end EP.

According to the present invention, the capsule 1 comprises at least one deformation damping member 21 of the bottom wall 5, as it will be specifically described in the following.

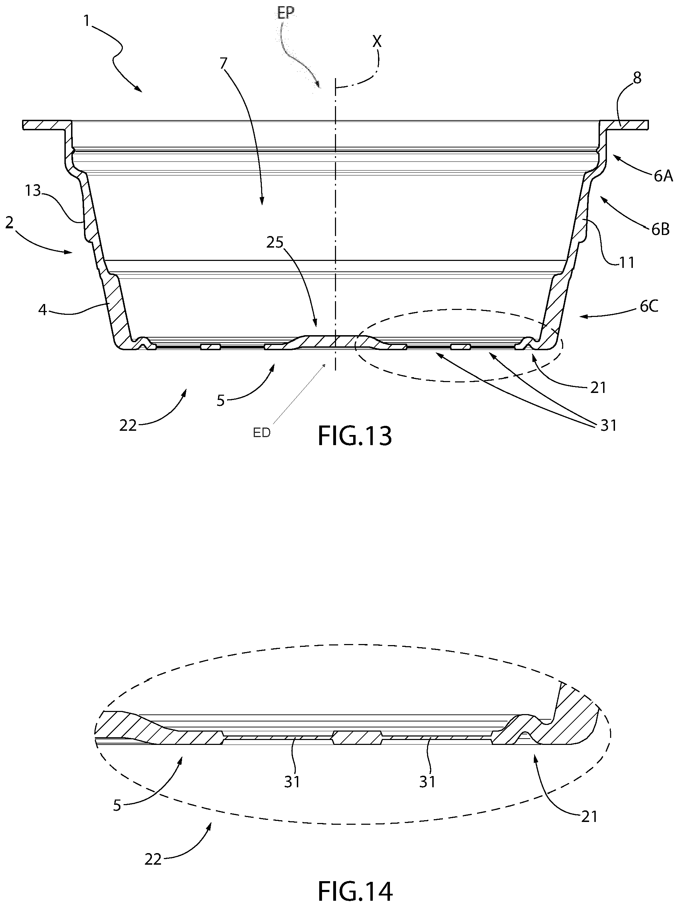

According to the advantageous but non-limiting embodiments illustrated in Figures 1-14, the capsule 1 has a preferably truncated cone shape and is provided in particular with a symmetry axis X which is a longitudinal axis of the capsule 1.

According to alternative but non-limiting embodiments which are not illustrated, the capsule 1 can have a shape, i.e. section transverse to the longitudinal extension between the ends EP and ED of the capsule 1, which is (non-exhaustive list) elliptical, rectangular, square, polygonal, shaped or a combination thereof.

Advantageously, but not limitedly, the cup-shaped body 2 is preferably manufactured as a single block (i.e. is manufactured as one single piece, seamlessly). The cup-shaped body 2 comprises (in particular, is composed of) a side wall 4 and a bottom wall 5. In particular, the bottom wall 5 is closed (i.e. is devoid of through openings).

According to the advantageous but non-limiting embodiments illustrated in the accompanying figures, the side wall 4 has three annular sectors arranged one after the other between the proximal end EP and the distal end ED. In particular, the side wall 4 has a proximal annular sector 6A, a central annular sector 6B and a distal annular sector 6C. In particular, the proximal annular sector 6A has a dimension (in particular, diameter) preferably constant between the proximal end EP thereof and the distal end ED thereof; whereas, the sectors 6A, 6B and 6C have a dimension (in particular, diameter) decreasing from the proximal end EP thereof to the distal end ED thereof.

According to an alternative but non-limiting embodiment, the side wall 4 can have all three sectors 6A, 6B and 6C with a truncated cone shape.

Advantageously, but not limitedly, the proximal annular sector 6A is provided with an annular shoulder 8 which laterally (in particular, radially) extends (i.e. projects) outwards and in the area of which the closing element 3 rests and is connected. In particular, the closing element 3 is preferably connected by welding or by fixed joint to the cup-shaped body 2 in the area of the annular shoulder 8.

In the advantageous but non-limiting alternative embodiment illustrated in the accompanying figures, the capsule 1 has in the area of the side wall 4 (in particular, of the central annular sector 6B) centring elements 11 which laterally (in particular, radially) project outwards from the side wall 4, so as to ensure, in use, the correct positioning of the capsule 1 inside a percolation chamber C of a beverage extraction machine M (as it will be specifically described in the following). In other words, the centring elements 11 engage a side wall P of the percolation chamber C, so as to maintain the capsule 1 (in particular, maintaining the symmetry axis X thereof) in a substantially vertical position.

Advantageously, but not limitedly, the centring elements 11 are at least three, preferably four, and laterally (in particular, radially) project outwards from the side wall 4.

Advantageously, but not limitedly, the centring elements 11 are equally spaced apart from one another on the circumference of the side wall 4, in particular in the area of the central annular sector 6B.

In the advantageous but non-limiting embodiments illustrated in the accompanying figures, the centring elements 11 comprise (in particular, are composed of) a longitudinal rib which extends for a portion (i.e. part) of the central annular sector 6B in longitudinal direction between the proximal end EP and the distal end ED (in particular, parallel to the symmetry axis X). Each centring element 11 has a head wall 13 (or a head surface) and two flanks 14 which are arranged on opposite sides of the head wall 13. In particular, in this embodiment the head wall 13 is substantially vertical. In particular, the head wall 13 is substantially parallel to the symmetry axis X (if present). Therefore, since the head wall 13 is substantially vertical and the cup-shaped body 2 preferably has a truncated cone shape, the centring elements 11 have a thickness which increases from the proximal end EP towards the distal end ED of the capsule 1. In the following disclosure, the term "thickness" means the dimension measured from the inside towards the outside of the cavity 7 of the capsule 1. In particular, the term "thickness" means the dimension substantially measured in the lateral (in particular, radial) direction for the side wall 4 and in the longitudinal direction (i.e. the direction defined between the proximal end EP and the distal end ED) for the bottom wall 5.

Advantageously, but not limitedly, the maximum thickness of the centring element 11 (in the area of an end, in particular the distal end, of the centring element 11, without keeping into account the thickness of the side wall 4) is comprised between 0.1 and 0.5 mm, is preferably equal to 0.2 mm.

According to the advantageous but non-limiting embodiments illustrated in the accompanying figures, the centring elements 11 have a width which decreases from the proximal end EP towards the distal end of the capsule 1. In other words, each centring element 11 (in particular, the front wall 13 thereof) is tapered towards the proximal end EP. In the following disclosure, the term "width" means the transverse dimension measured in the direction tangent to the side wall 4 (which is transverse, in particular orthogonal, for example to a lateral, in particular radial, direction).

According to alternative (but non-limiting) embodiments not illustrated, the centring elements 11 have a width which is uniform.

According to alternative (but non-limiting) embodiments not illustrated, the centring elements 11 have a width which increases from the proximal end EP towards the distal end ED of the capsule 1.

In the advantageous but non-limiting alternative embodiments illustrated in the accompanying figures, the capsule 1 comprises a plurality of stiffening elements 15 of the side wall 4 and a plurality of preferential deformation areas 16 of the side wall 4. The stiffening elements 15 (in particular laterally, preferably radially) project from the side wall 4 towards the outside or towards the inside of the cavity 7. The stiffening elements 15 are (in particular, exclusively) arranged in the area of the distal annular sector 6C.

According to the advantageous but non-limiting embodiments illustrated in the accompanying figures, the stiffening elements 15 laterally (in particular, radially) project from the side wall 4 towards the outside of the cavity 7.

According to alternative but non-limiting embodiments not illustrated, the stiffening elements 15 can laterally (in particular, radially) project from the side wall 4 towards the inside of the cavity 7.

According to a further alternative embodiment (not illustrated), from the side wall 4 the stiffening elements 15 can laterally (in particular, radially) project towards the inside and laterally (in particular, radially) project towards the outside of the cavity 7 in an alternated manner.

According to the advantageous but non-limiting embodiments illustrated in the accompanying figures, the stiffening elements 15 are alternated with the preferential deformation areas 16. In other words, the preferential deformation area 16 is interposed between two stiffening elements 15. Similarly, the stiffening element 15 is interposed between two preferential deformation areas 16.

The preferential deformation areas 16 are configured, in use, to laterally (in particular, radially) deform outwards. The preferential deformation areas 16 are more deformable than the stiffening elements 15. In other words, the lateral deformation (in particular, the deformation in radial direction) of the preferential deformation areas 16 is greater than the stiffening elements 15. Alternatively, only the preferential deformation areas 16 are configured to laterally (in particular, radially) deform outwards, whereas the stiffening elements 15 substantially maintain their shape and dimension unvaried. In other words, the stiffening elements 15 are substantially laterally (in particular, radially) non-deformable outwards. Therefore, the preferential deformation areas 16 define preferential deformation areas of the side wall 4.

Advantageously, but not limitedly, the preferential deformation areas 16 of the side wall 4 have a thickness (in particular, measured from the inside of the cavity 7 to the outside of the cavity 7) which is smaller than the side wall 4 in the area of the stiffening elements 15. In other words, in the area of the stiffening elements 15 the side wall 4 has a greater thickness (in particular, given by the thickness both of the side wall 4 and of the stiffening elements 15 which project therefrom) than the preferential deformation areas 16. Therefore, the areas having a smaller thickness (i.e. the preferential deformation areas 16) have, in use under the action of the pressure of the water, an expansion (i.e. a preferably lateral, in particular radial, deformation) greater than the stiffening elements 15.

Advantageously, but not limitedly, the side wall 4 (and thus each preferential deformation area 16) has a thickness comprised between 0.5 mm and 6.0 mm, in particular equal to approximately 3.0 mm.

Advantageously, but not limitedly, the stiffening elements 15 have a thickness (without keeping into account the thickness of the side wall 4) comprised between 0.4 mm and 1.0 mm, in particular equal to approximately 0.8 mm. Therefore, the side wall 4 in the area of the stiffening elements 15 has a thickness (keeping into account both the thickness of the side wall 4, and of the stiffening element 15 thereof) which is comprised between 0.8 and 2 mm, in particular equal to approximately 1.2 mm.

In the advantageous but non-limiting embodiments illustrated in the accompanying figures, the stiffening elements 15 are longitudinal ribs. In other words, the stiffening elements 15 comprise (in particular, are composed of) a longitudinal rib which extends for a portion (i.e. part) of the distal annular sector 6C in longitudinal direction (in particular, parallel to the symmetry axis X) from the proximal end EP to the distal end ED.

Advantageously, but not limitedly, the longitudinal ribs that make the stiffening elements 15 are different as to shape and/or dimension (in particular diameter and/or height and/or thickness) relative to the same dimensions of the longitudinal ribs that make the centring elements 11. In particular, the longitudinal ribs that make the stiffening elements 15 have a dimension (for example width and/or height and/or thickness) which is greater than the same dimension of the longitudinal ribs that make the centring elements 11.

Advantageously, but not limitedly, the longitudinal ribs that make the stiffening elements 15 are longitudinally aligned with the longitudinal ribs that make the centring elements 11. Alternatively, the longitudinal ribs that make the stiffening elements 15 can be staggered relative to the longitudinal ribs that make the centring elements 11.

Advantageously, but not limitedly, the stiffening elements 15 are equally spaced apart from one another around the circumference of the side wall 4.

Advantageously, but not limitedly, the capsule 1 has a number of stiffening elements 15 comprised between 15 and 40, preferably 20 and 30, in particular equal to 24.

Advantageously, but not limitedly, each stiffening element 15 has a head wall 17 (or, a head surface) and two flanks 18 arranged on opposite sides of the head wall 17 thereof. The head wall 17 is inclined by an angle of inclination which is equal to an angle of inclination of the cup-shaped body 2. In particular, as is visible in Figure 1, the stiffening elements 15 do not protrude beyond the lateral (in particular, radial) bulks of the central annular sector 6B.

Advantageously, but not limitedly (as is illustrated in Figure 2), the stiffening elements 15 comprise hollow ribs. In other words, the side wall 4 is shaped (in particular, bent) so as to define the longitudinal rib (which on the inside is empty, i.e. does not have filling material).

Advantageously, according to alternative (but non-limiting) embodiments not illustrated, the stiffening elements 15 comprise full ribs. In other words, the side wall 4 has massive longitudinal ribs (i.e. they are not hollow and are provided with filling material).

Advantageously, but not limitedly, the stiffening elements 15 are tapered towards the proximal end EP.

Advantageously, but not limitedly, each flank 18 is jointed with the side wall 4 of the cup-shaped body 2.

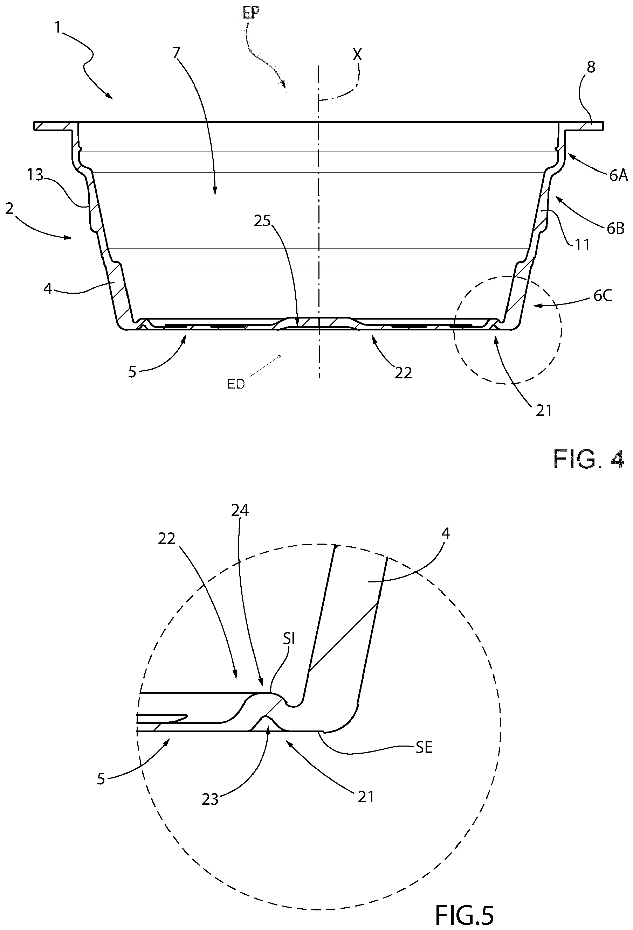

According to the present invention, illustrated in the accompanying figures, the capsule 1 comprises the at least one deformation damping member 21 of the bottom wall 5 which is configured to allow at least one portion of the bottom wall 5 (or the entire bottom wall 5) to move, in use, in particular along the symmetry axis X, between an initial position PI (illustrated, for example, in Figures 4, 6, 9 and 13) and a final position PF (not illustrated) . In the final position PF the at least one portion of the bottom wall 5 is longitudinally shifted (in particular, along the symmetry axis X) towards the proximal end EP relative to the initial position PI. In particular, the deformation damping member 21 allows the bottom wall 5 to yield (i.e. follow the shifting) caused by the force applied by a perforation unit U which is configured to perforate the bottom wall 5 so as to make, in use, the infused beverage come out, as it will be specifically discussed in the following. Therefore, the deformation damping member 21 acts as elastic return means of the bottom wall 5.

Advantageously, but not limitedly, the portion of the bottom wall 5 which is movable (in particular, along the symmetry axis X) is a central portion 22 of the bottom wall 5 which is peripherally (in particular, externally) delimited by the deformation damping member 21. In particular, as is illustrated in Figures 2 and 4-11, the deformation damping member 21 is arranged between the central portion 22 and the side wall 4.

Advantageously, but not limitedly, the deformation damping member 21 is manufactured as one single piece (i.e. seamlessly) together with the cup-shaped body 2. In other words, the deformation damping member 21 is integral with the bottom wall 5 and is part of the bottom wall 5. In particular, the deformation damping member 21 is obtained from the conformation of the bottom wall 5 in such area.

Advantageously, but not limitedly, the deformation damping member 21 has a smaller thickness than the side wall 4.

Advantageously, but not limitedly, the deformation damping member 21 has a smaller thickness than the bottom wall 5.

Advantageously, but not limitedly, the deformation damping member 21 has a thickness comprised between 0.2 mm and 1.0 mm.

According to the advantageous embodiments illustrated in the accompanying figures, the deformation damping member 21 comprises at least one annular recess 23 and/or at least one annular projection 24. In other words, the bottom wall 5 has a conformation that is such as to have an annular recess 23 and/or an annular projection 24. In particular, the term "recess" means an annular groove made in the bottom wall 5. That is, the term "recess" means an annular depression which prolongs towards the inside (i.e. in the direction from the distal end ED to the proximal end EP) of the capsule 1, i.e. which prolongs towards the cavity 7 of the capsule 1. Whereas, the term "projection" means an annular relief made in the bottom wall 5. That is, the term "projection" means an annular protrusion which prolongs towards the outside (in the direction from the proximal end EP to the distal end ED) of the capsule 1.

Advantageously, but not limitedly, the capsule has the annular recess 23 and/or the annular projection 24 in the area of the inner surface SI of the bottom wall 5 and/or of the outer surface SE of the bottom wall 5.

Advantageously, but not limitedly, the annular recess 23 and/or the annular projection 24 are substantially annular, i.e. they define a complete ring (i.e. a closed curve). In particular, the ring can also not have a circular shape (for example it could have a shape which is elliptical, square, rectangular, polygonal, shaped or a combination thereof).

Advantageously, but not limitedly, the annular recess 23 and/or the annular projection 24 could also, instead, only comprise a substantially annular sector, i.e. which does not define a complete ring (i.e. closed curve), but only a portion thereof. In other words, the annular recess 23 and/or the annular projection 24 comprise(s) at least one ring portion. In particular, also in this case the ring can also not have a circular shape (for example it could have a shape which is elliptical, square, rectangular, polygonal, shaped or a combination thereof).

In particular, the annular recess 23 and/or the annular projection 24 confer to the bottom wall 5 an elasticity such to yield (i.e. follow the shifting of the bottom wall 5) thus making the bottom wall 5 more elastic and preventing the formation of cracks.

According to the advantageous but non-limiting embodiment illustrated in Figures 4-8, the deformation damping member 21 comprises the annular recess 23 externally (i.e. made in the area of an outer surface SE of the bottom wall 5) and the annular projection 24 internally (i.e. made in the area of the inner surface SI in the cavity 7 of the capsule 1, i.e. of the bottom wall 5) . Furthermore, according to this embodiment, in the initial position PI the central portion 22 of the bottom wall 5 is coplanar to a distal end of the side wall 4. In other words, in the initial position PI the central portion 22 is arranged flush with the distal end of the side wall 4.

Advantageously, but not limitedly, according to this embodiment illustrated in Figures 4-8, the central portion 22 of the bottom wall 5 has a central recess 25 (i.e. a depression) which is concentric to the symmetry axis X. In particular, in the area of the central recess 25, the bottom wall 5 is shifted towards the proximal end EP (in the direction from the distal end ED towards the proximal end EP) in the area of the central recess 25.

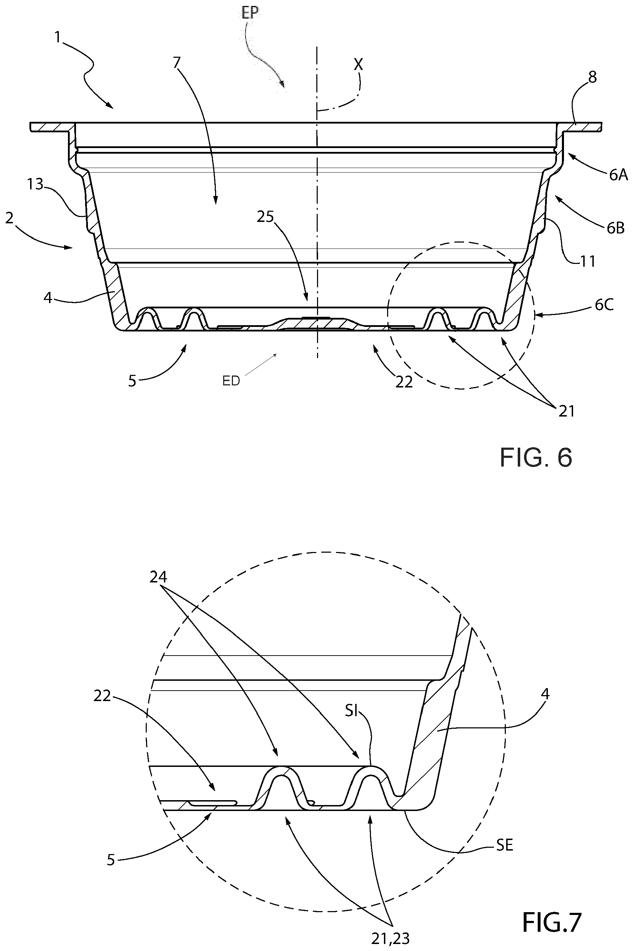

According to the advantageous but non-limiting alternative embodiment illustrated in Figures 6-8, the capsule 1 comprises two deformation damping members 21 arranged side by side (i.e. arranged beside one another). In particular, a deformation damping member 21 is arranged more internally and the other one more externally (i.e. closer to the side wall 4). In particular, as is illustrated in Figures 6-8, the capsule 1 has the two deformation damping members 21 concentric to one another.

Advantageously, but not limitedly, the two deformation damping members 21 are of the same type (i.e. they are both recesses or projections).

Additionally or alternatively, the two deformation damping members 21 have the same dimension (i.e. thickness and/or height and/or width). Alternatively, the two deformation damping members 21 have dimensions (i.e. thickness and/or height and/or width) different from one another.

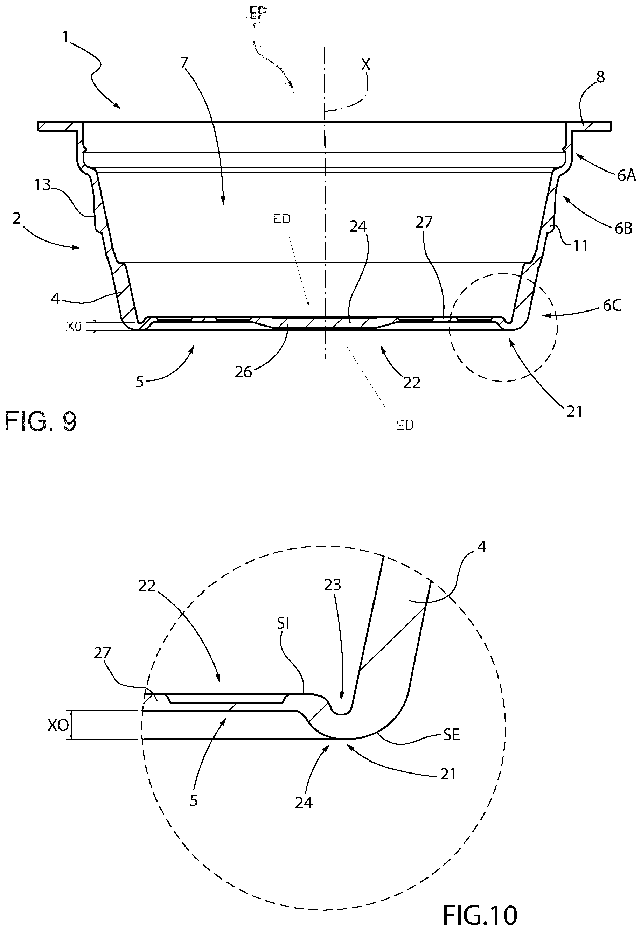

According to the advantageous but non-limiting alternative embodiment illustrated in Figures 9-11, the deformation damping member 21 comprises the annular recess 23 internally (i.e. made in the area of the inner surface SI of the cavity 7 of the capsule 1, i.e. of the bottom wall 5) and the annular projection 24 externally (i.e. made in the area of the outer surface SE of the bottom wall 5). Furthermore, in the initial position PI the central portion 22 of the bottom wall 5 is shifted by an initial quantity X0 (in particular, along the symmetry axis X) relative to the distal end ED of the side wall 4. In particular, according to what is illustrated in Figures 9-11, the central portion 22 recesses by the initial quantity X0 relative to the distal end of the side wall 4. That is, in the initial position PI the central portion 22 of the bottom wall 5 is shifted by the initial quantity X0 towards the proximal end EP, in particular towards the inside of the cavity 7. Therefore, in the final position PF, the bottom wall 5 will be further shifted towards the proximal end EP of the capsule.

According to a possible alternative but non-limiting embodiment not illustrated, the central portion 22 protrudes by the initial quantity X0 relative to the distal end of the side wall 4. That is, in the initial position PI the central portion 22 of the bottom wall 5 is shifted by the initial quantity X0 in the direction of the distal end ED, in particular towards the outside of the cavity 7. In the final position PF, the protruding portion of the bottom wall 5 is shifted towards the proximal end EP of the capsule 1.

Advantageously, but not limitedly, according to this embodiment illustrated in Figures 9-11, the central portion 22 of the bottom wall 5 has a central projection 26, i.e. a protrusion (which in particular is concentric to the symmetry axis X). The central projection 26 is shifted towards the proximal end EP (in the direction of the symmetry axis X). In particular, the central projection 26 is flush (i.e. coplanar) with the distal end ED of the side wall 4.

Advantageously, but not limitedly, the central recess 25 and the central projection 26 involve less than 40% of the central portion 22.

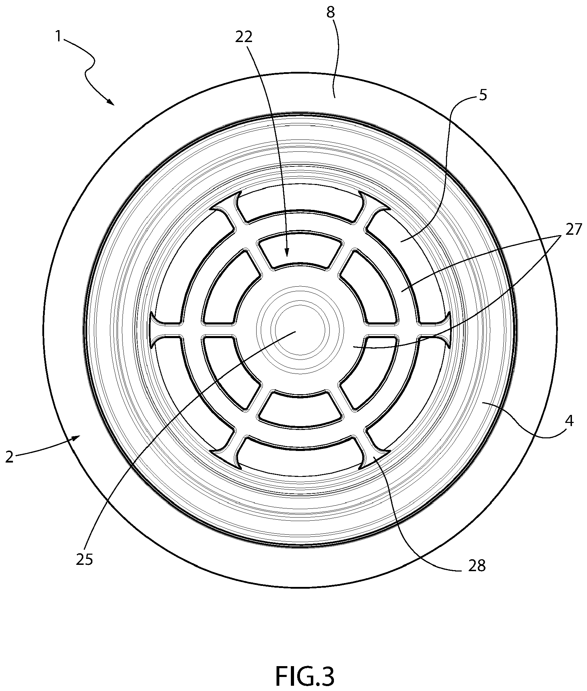

According to the advantageous embodiments illustrated in the accompanying Figures 1-11 (in particular, as is clearly illustrated in Figure 3), the inner surface SI of the bottom wall 5 facing the cavity 7 (i.e. the surface in contact with the infusion product) has one or more annular ribs 27 which are concentric to one another and one or more radial ribs 28 which intersect in particular the annular ribs 27. In particular, Figure 3 illustrates two annular ribs 27 and six radial ribs 28.

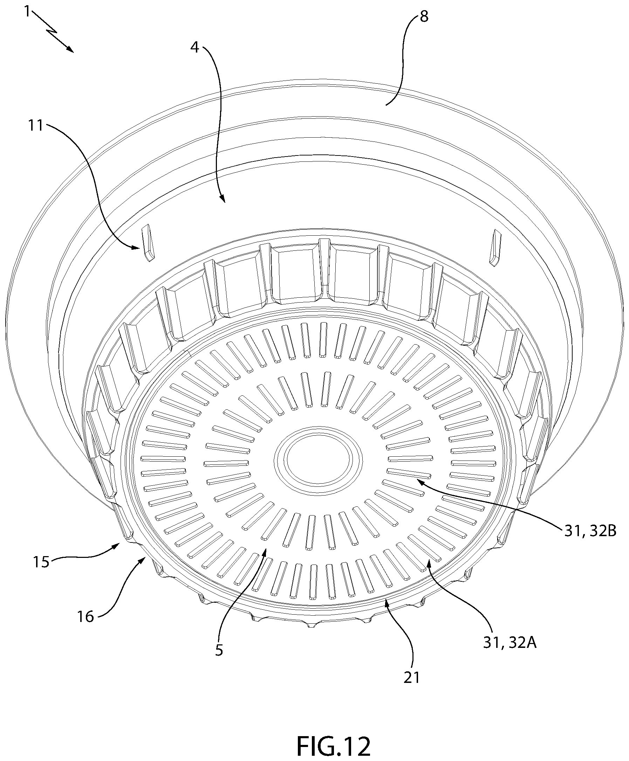

According to the advantageous but non-limiting alternative embodiment illustrated in Figures 12-14, the capsule 1 comprises a plurality of material weakening areas 31 configured to define, in use during the perforation of the bottom wall 5, preferential breaking areas, in particular for making the through openings through which the infused beverage comes out. In other words, during the perforation of the bottom wall 5 by means of the perforation means E the bottom wall 5 breaks, preferably in the area of the material weakening areas 31, creating the through openings which allow the infused beverage to come out.

It is understood that the perforation means E can perforate the bottom wall 5 in the area of the material weakening areas 31 or in the proximity of the material weakening areas 31 (i.e. in the area of the bottom wall 5 devoid of (but near) material weakening areas 31.

Advantageously, but not limitedly, the thickness of the bottom wall 5 is greater than the thickness of the material weakening areas 31. In other words, the material weakening areas 31 are defined by a reduction in thickness of the bottom wall 5. In other words, the material weakening areas 31 are thinner than the remaining part of the bottom wall 5. Preferably, the material weakening areas 31 do not comprise through openings.

Advantageously, but not limitedly, the thickness of the material weakening areas 31 is 50% smaller than the thickness of the remaining portion of the bottom wall 5. That is, the thickness of the bottom wall 5 (in the area of an area devoid of material weakening areas 31) is 50% greater than the thickness of the material weakening areas 31.

Advantageously, but not limitedly, the bottom wall 5 has a thickness comprised between 0.2 mm and 0.9 mm, preferably equal to 0.4 mm. Whereas, the material weakening areas 31 have a thickness comprised between 0.1 mm and 0.3 mm, preferably equal to 0.2 mm.

According to the advantageous (but non-limiting) embodiment illustrated in Figures 12-14, the material weakening areas 31 are uniformly distributed on the bottom wall 5, in particular in the area of the central portion 22. In particular, the material weakening areas 31 are arranged (i.e. extend with main orientation) in the radial direction. As is illustrated in the accompanying figures, the material weakening areas 31 have a substantially rectangular shape.

According to alternative but non-limiting embodiments not illustrated, the material weakening areas 31 have a shape which is substantially elliptical, cross, triangular, circular, square, polygonal, shaped or a combination thereof.

Advantageously, but not limitedly, as is illustrated in Figure 12, the bottom wall 5 has two groups 32A and 32B of material weakening areas. The two groups 32A and 32B of material weakening areas 31 are arranged side by side (in particular, in a concentric manner). In particular, the group 32B is arranged closer to the symmetry axis X; whereas, the group 32A of material weakening areas 31 is arranged between the group 32B of material weakening areas 31 and the side wall 4 or the deformation damping member 21.

Advantageously, but not limitedly, the two groups 32A and 32B of material weakening areas 31 have the same thickness. In other words, the bottom wall 5 has in the area of the group 32A of material weakening areas 31 the same reduction in thickness of the bottom wall 5 in the area of the other group 32B of material weakening areas. Alternatively, the two groups 32A and 32B of material weakening areas 31 can have two thicknesses different from one another. In other words, the group 32A of material weakening areas 31 has the thickness which is greater or is smaller than the other group 32B of material weakening areas 31.

Advantageously, but not limitedly, according to what illustrated in particular in Figures 12-14, when the bottom wall 5 is provided with the material weakening areas 31, it is devoid of the annular ribs 27 and/or of the radial ribs 28.

According to an alternative but non-limiting embodiment not illustrated, when the bottom wall 5 is provided with the material weakening areas 31, it can also be provided with the annular ribs 27 and/or the radial ribs 28.

Summarising, the capsule 1 described up to here comprises one or more deformation damping members 21. According to a possible alternative embodiment it can also be provided with at least one element chosen among: the centring elements 11, the stiffening elements 15 together with the preferential deformation areas 16 and the material weakening areas 31 or a combination of at least two thereof.

Advantageously, but not limitedly, at least the cup-shaped body 2 comprises (in particular, is made of) a material that is, in particular completely, biodegradable or compostable in compliance with standard UNI EN 13432. In particular, the cup-shaped body 2 mainly comprises (in particular is made of) polylactic acid (PLA).

Advantageously, but not limitedly, the closing element 3 comprises (in particular, is made of) a metallic material, such as for example aluminium.

Preferably, the entire capsule 1 (i.e. the cup-shaped body 2 and the closing element 3) comprises (in particular, is made of) a material that is, in particular completely, biodegradable or compostable in compliance with standard UNI EN 13432.

According to a further aspect of the present invention, a use is provided of a capsule 1 as described above (and/or according to any one of the appended claims) in a beverage extraction machine M (in particular as described above) which comprises perforation means E; according to said use, while the capsule 1 is arranged in the percolation chamber C of the machine M, the perforation means E penetrate the bottom wall 5 so as to make at least one through opening (in particular, hole).

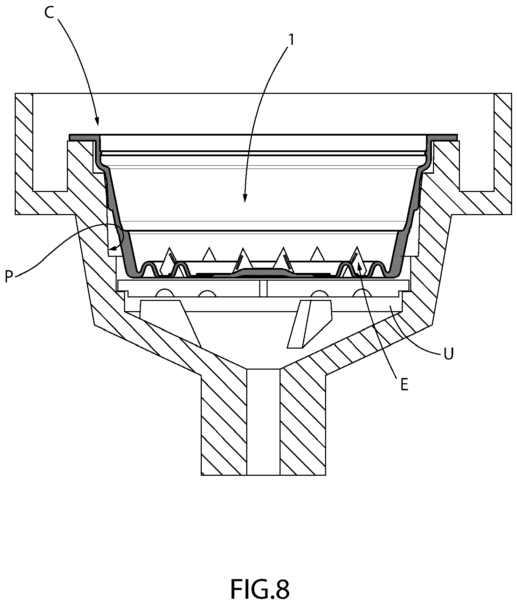

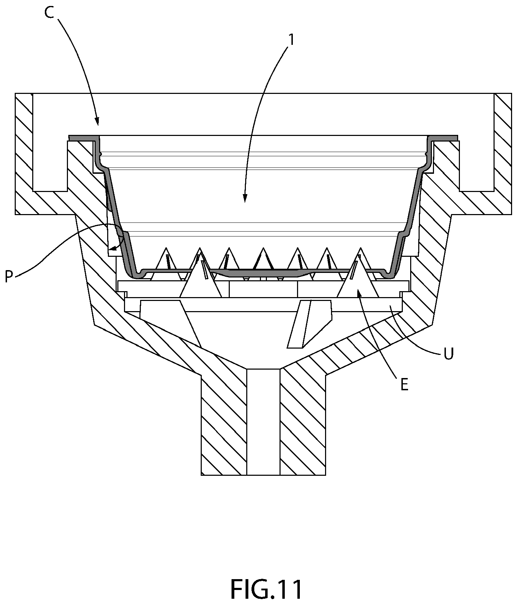

In use, as is schematically illustrated in Figures 8 and 11, the capsule 1 is inserted in the percolation chamber C (which is not part of the present invention) of the beverage extraction machine M. The capsule 1 inserted in the percolation chamber C has the centring elements 11 (if present) which engage in abutment against the side wall P of the percolation chamber C. The percolation chamber C has the perforation unit U which is configured to make a hole in the closing element 3 and in the bottom wall 5. In particular, the perforation unit U comprises a plurality of perforation means E. It is highlighted that, for simplicity, Figures 8 and 11 only illustrate the perforation means E of the bottom wall 5; whereas, the perforation means E of the closing element 3 are not illustrated. Through at least one opening (in particular, hole) made in the area of the closing element 3, water is injected under pressure for mixing it inside the cup-shaped body 2 with the infusion product.

The pressure of the injected water increases the inner pressure of the capsule 1 and leads it to expand (i.e. to laterally, in particular radially, deform) towards the outside of the cavity 7. The preferential deformation areas 16 (if present) expand (i.e. laterally, in particular radially, deform outwards) more than the stiffening elements 15 (which expand less than the preferential deformation areas 16 of the side wall 4 or do not expand at all). During the perforation of the bottom wall 5, for example in the area of the material weakening areas 31 (if present), the deformation damping members 21 allow the bottom wall 5 to yield (i.e. shift thanks to the action of the deformation damping member 21) for making the perforation through the perforation unit U less violent and for preventing the stresses induced by the perforation means E from breaking (i.e. cracking) the bottom wall 5.

Finally, the infused beverage comes out of the cup-shaped body 2 through at least one opening (in particular, hole) made in the area of the bottom wall 5 (for example in the area or in the proximity of the material weakening areas 31) for being collected inside a container (such as, for example, a coffee cup, mug or glass).

The capsule 1 described up to here has a plurality of advantages.

Firstly, the capsule 1 provided with at least one deformation damping member 21 allows the bottom wall 5 to accompany the perforation means E during the perforation act, making the perforation less sudden and preventing the bottom wall 5 from forming cracks. The deformation damping member 21 thus contributes to improving the mechanical resistance of the bottom wall 5 and consequently of the capsule 1.

Besides, by making the bottom wall 5 shifted by the initial quantity X0 relative to the distal end of the side wall 4, it is possible to anticipate or delay the making of the hole in the capsule 1 through the perforation means E. In particular, by making the portion 22 shifted by the initial quantity X0 towards the proximal end EP (i.e. recessed towards the inside of the cavity 7), it is possible to delay the perforation carried out by the perforation means E. Whereas, by making the portion 22 shifted by the initial quantity X0 towards the distal end ED (i.e. protruding towards the outside of the cavity 7), it is possible to anticipate the perforation carried out by the perforation means E.

Secondly, the capsule 1 provided with the centring elements 11 (if present) ensures a correct insertion and orientation of said capsule 1 in the percolation chamber C. In fact, the centring elements 11 prevent the capsule 1 from being arranged in the percolation chamber C with an inclination relative to the optimal positioning (in particular, with the symmetry axis X vertical). In other words, the centring elements 11 force the capsule 1 to be substantially arranged vertically in the percolation chamber C (i.e. in particular, to substantially maintain the symmetry axis X vertical).

By increasing the number of the centring elements 11, the centring of the capsule 1 in the percolation chamber C further increases.

By making the head wall 13 substantially vertical, the contact area between the centring element 11 and the side wall P of the percolation chamber C is increased.

Furthermore, the capsule 1 provided with the stiffening elements 15 (if present) alternated with the preferential deformation areas 16 (if present) allows reducing the total expansion of the side wall 4 (in particular, at the distal annular sector 6C). In particular, since the stiffening elements 15 and the preferential deformation areas 16 have a thickness different from one another, the side wall 4 expands (i.e. laterally, in particular radially, deforms towards the outside of the cavity 7) in a differential manner between the stiffening elements 15 and the preferential deformation areas 16. More specifically, the portions of the side wall 4 in the area of the distal annular sector 6C will expand, i.e. will deform more than the stiffening elements 15 which provide rigidity to the side wall 4. Therefore, as a whole, the side wall 4 expands (i.e. deforms, in particular laterally) less and therefore the capsule 1 cannot remain jammed in the percolation chamber C. Therefore, the overall deformation of the side wall 4 is a lot less.

Additionally, the capsule 1 provided with the stiffening elements 15 has a greater mechanical resistance to the stresses induced by the perforation means E during the perforation of the bottom wall 5.

The capsule 1 provided with the material weakening areas 31 (if present) allows the perforation means E to more easily perforate the bottom wall 5, since the material weakening areas 31 have a reduction in material. Furthermore, the material weakening areas 31 allow the perforation means E to make an opening (i.e. hole) with a dimension and a configuration such to ensure that the infused beverage comes out with a continuous and uniform jet. Additionally, the material weakening areas 31 allow better controlling the making of the hole by the perforation means E, increasing the outflow of the infused beverage and thus reducing (in particular, completely eliminating) the dispensing discontinuities.

Finally, the above-mentioned characteristics of this capsule also allow using all the new materials of the socalled "Green Economy" (such as for example biopolymers, biobased materials, etc.), known for their low physical-mechanical characteristics and for their reduced environmental impact.

## Claims

1. A capsule (1) for infusion products having a distal end (ED) and a proximal end (EP) opposite the distal end (ED); the capsule (1) comprises:
a cup-shaped body (2), which defines a cavity (7) configured to house an infusion material; the cup-shaped body (2) comprises a side wall (4) and a bottom wall (5) (which, in particular, is closed); and
a closing element (3), which is arranged so as to close the cavity (7) of the cup-shaped body (2) in the area of the proximal end (EP);
**characterized in that** the bottom wall (5) comprises at least one deformation damping member (21), which is configured to allow at least one portion of the bottom wall (5) to move, in use, between an initial position (PI) and a final position (PF); wherein, in the final position (PF), said at least one portion of the bottom wall (5) is longitudinally shifted towards the proximal end (EP) relative to the initial position (PI).

2. The capsule (1) according to claim 1, wherein there are two deformation damping members (21), which are arranged beside one another (in particular, in a concentric manner).

3. The capsule (1) according to claim 1 or 2, wherein the longitudinally shifted portion is a central portion (22) peripherally delimited by the deformation damping member (21) .

4. The capsule (1) according to claim 3, wherein the deformation damping member (21) is arranged between the central portion (22) and the side wall (4).

5. The capsule (1) according to any one of the preceding claims, wherein the deformation damping member (21) is manufactured as one single piece together with the bottom wall (5).

6. The capsule (1) according to any one of the preceding claims, wherein the bottom wall (5) has, in the area of the deformation damping member (21), a conformation that is such as to have at least one annular recess (23) and/or at least one annular projection (24).

7. The capsule (1) according to claim 6, wherein:
the capsule (1) has the annular recess (23) in the area of an outer surface (SE) of the bottom wall (5) and the annular projection (24) in the area of an inner surface (SI) of the bottom wall (5); or
the capsule (1) has the annular recess (23) in the area of an inner surface (SI) of the bottom wall (5) and the annular projection (24) in the area of an outer surface (SE) of the bottom wall (5).

8. The capsule (1) according to any one of the claims from 3 to 7, wherein, in the initial position, the central portion (22) of the bottom wall (5) is coplanar to a distal end of the side wall (4).

9. The capsule (1) according to any one of the claims from 3 to 7, wherein, in the initial position (PI), the central portion (22) is shifted by an initial quantity (X0) relative to the distal end of the side wall (4); wherein the central portion (22) protrudes or recesses by the initial quantity (X0) relative to the distal end of the side wall (4) .

10. The capsule (1) according to any one of the preceding claims, wherein the deformation damping member (21) has a smaller thickness than the side wall (4).

11. The capsule (1) according to any one of the preceding claims, wherein the bottom wall (5) has, (preferably in the area of an inner surface SI facing the cavity 7), one or more annular ribs (27), which are concentric to one another.

12. The capsule (1) according to claim 11, wherein the bottom wall (5) has one or more radial ribs (28), which intersect the annular ribs (27).

13. The capsule (1) according to any one of the preceding claims, wherein the cup-shaped body (2) is made of a material that is (in particular, completely) biodegradable or compostable in compliance with standard UNI EN 13432 (in particular, the cup-shaped body 2 mainly comprises polylactic acid PLA).

14. The capsule (1) according to any one of the preceding claims, wherein the side wall (4) has a plurality of stiffening elements (15), which project (in particular, laterally) from the side wall (4) towards the outside or towards the inside of the cavity (7), and a plurality of preferential deformation areas (16) of the side wall (4), which are configured, in use, to deform outwards; the stiffening elements (15) are alternated with the preferential deformation areas (16); and wherein the preferential deformation areas (16) are more deformable than the stiffening elements (15).

15. The capsule (1) according to any one of the preceding claims, wherein the side wall (4) has centring elements (11), which laterally project outwards from the side wall (4) and are configured, in use, to engage a side wall (P) of a percolation chamber (C) of a beverage extraction machine (M).

16. The capsule (1) according to any one of the preceding claims, wherein the bottom wall (5) has a plurality of material weakening areas (31), which are configured to define, in use, during the perforation of the bottom wall (5), preferential breaking areas.
